Europäisches Patentamt

European Patent Office

Office européen des brevets

(19)

(11) Numéro de publication: **0 099 280**
**B1**

(12) **FASCICULE DE BREVET EUROPÉEN**

(45) Date de publication du fascicule du brevet:
**05.11.86**

(51) Int. Cl.⁴: **B 60 P 1/38,** B 65 G 1/06

(21) Numéro de dépôt: **83401188.4**

(22) Date de dépôt: **10.06.83**

(54) Enceinte pour le stockage et la manutention rapide de charges unitaires, et en particulier cabine de chargement pour véhicule routier.

(30) Priorité: **11.06.82 FR 8210229**

(43) Date de publication de la demande:
**25.01.84 Bulletin 84/4**

(45) Mention de la délivrance du brevet:
**05.11.86 Bulletin 86/45**

(84) Etats contractants désignés:
**AT BE CH DE GB IT LI LU NL SE**

(56) Documents cité:
**GB-A-1 552 316**
**US-A-3 142 396**

(73) Titulaire: **GENERALE DE TRANSPORT ET D'INDUSTRIE, 9, boulevard Malesherbes, F-75008 Paris (FR)**
Titulaire: **SOCIETE AUXILAIRE DE MANUTENION ACCELEREE DE DENREES ALIMENTAIRES, 4 rue Courson Senia Nord, F-94320 Thiais (FR)**
Titulaire: **CARROSSERIE TROUILLET, 17, avenue Ferdinand de Lesseps Zone Industrielle Sud, F-91420 Morangis (FR)**
Titulaire: **COMPAGNIE DES TRANSMISSIONS MECANIQUES SEDIS Société dite:, 102 Rue Danton, F-92306 Levallois Perret (FR)**

(72) Inventeur: **Fourtet, Jean-Paul, 46, rue de Strasbourg, F-78500 Sartrouville (FR)**
Inventeur: **Hennard, Jean, 57, parc de Maugarny, F-95680 Montlignon (FR)**
Inventeur: **Trouillet, André, 16, rue Raymond Marcheron, F-92170 Vanves (FR)**
Inventeur: **Leroux, Alain, 9, parc Hispano suiza, F-78130 Les Mureaux (FR)**

(74) Mandataire: **Chauchard, Robert, c/o Cabinet Malémont 42, avenue du Président Wilson, F-75116 Paris (FR)**

LIBER, STOCKHOLM 1986

EP 0 099 280 B1

## Description

L'invention porte sur une enceinte pour le stockage et la manutention rapide de charges unitaires, de forme parallélépipédique et en particulier une cabine de chargement de véhicule routier accessible par l'arrière, qui comprend au moins un plancher constitué de panneaux juxtaposés reposant sur une paire de rails, des moyens de mise en réserve étant prévus pour effacer le premier panneau ainsi que chaque panneau suivant lorsqu'il occupe la position du premier ainsi que pour effectuer la manoeuvre inverse. Une telle enceinte est décrite dans le brevet britannique GB-A- 1 552 316.

Les véhicules routiers, qu'il s'agisse de camions, de remorques ou de semi-remorques, constituent un exemple d'enceinte pour le stockage et la manutention rapide de charges unitaires qui posent des problèmes restés sans solution jusqu'à ce jour.

On sait que de tels véhicules s'utilisent en particulier pour la livraison dans des secteurs urbains ou à forte circulation, de marchandises diverses à partir d'un entrepôt. C'est ainsi que se ravitaillent les commerces de détail appartenant à une même chaîne, auxquels les véhicules livrent à intervalles réguliers diverses marchandises contenues dans un ou plusieurs conteneurs roulants qui sont de simples chariots à quatre roulettes équipés de parois latérales dont certaines sont fixes par rapport au fond du chariot, les autres étant amovibles ou remplacées par des sangles. Ces conteneurs sont plus ou moins remplis dans l'entrepôt à la demande du commerçant, chargés sur le véhicule et déchargés le plus rapidement possible devant son magasin.

Malgré l'utilisation de hayons devenus classiques à l'arrière du véhicule, le chargement et surtout le déchargement des conteneurs roulants prennent un temps non négligeable. En outre, ces conteneurs sont prévus d'une hauteur compatible avec l'espace libre disponible dans la cabine et leur volume est donc souvent disproportionné avec la quantité de marchandises à livrer. Les véhicules sont ainsi très mal utilisés.

L'invention a pour objet de remédier à ces inconvénients et, pour ce faire, elle a pour objet une enceinte, et en particulier une cabine de véhicule routier qui se caractérisé en ce qu'elle est accessible seulement par une de ses faces de plus petite dimension, en ce que le plancher est un plancher intermédiaire entre le plancher de l'enceinte et sa couverture, et en ce que les moyens de mise en réserve sont constitués par un élévateur qui déplace par translation verticale le panneau placé en première position entre cette position et une position de réserve contre la couverture de l'enceinte, élévateur complété par des deuxièmes moyens de translation et une deuxième paire de rails disposés sous la couverture de l'enceinte, de même structure que les moyens de translation et les rails disposés au niveau du plancher intermédiaire.

Il est à noter à ce propos que le brevet US-A-3 142 396 décrit une cabine de chargement comprenant des planchers intermédiaires entre le plancher de l'enceinte et sa couverture.

Avantageusement, les panneaux reposent sur les rails par l'intermé diaire de galets de roulement.

On dispose ainsi à l'intérieur de l'enceinte non plus d'un, mais de deux niveaux de chargement, le premier étant formé par le plancher proprement dit de l'enceinte, et le second par le plancher intermédiaire constitué de panneaux juxtaposés. Le nombre de conteneurs roulants susceptibles d'être manipulés est ainsi doublé. Il est vrai que ces conteneurs sont de plus faible hauteur, mais cela est sans conséquence pratique puisque dans la grande majorité des cas, ils sont encore bien suffisants pour contenir la quantité de marchandises désirée.

En outre, l'utilisation des moyens de mise en réserve et de translation permet de manutentionner les conteneurs mobiles de la rangée supérieure sans avoir à pénétrer dans l'enceinte, ce qui est très important car la hauteur disponible est trop faible pour la circulation du personnel. On notera que ce problème ne se pose pas pour les conteneurs mobiles de la rangée inférieure car la manutention de ces conteneurs se fait lorsque les panneaux sont mis en réserve, grâce à quoi pratiquement toute la hauteur de l'enceinte est disponible.

Dans un mode de réalisation préféré de l'invention, les moyens de mise en réserve sont constitués par un élévateur qui déplace par translation verticale le panneau placé en première position entre cette position et une position de réserve contre la couverture de l'enceinte, élévateur complété par des deuxièmes moyens de translation et une deuxième paire de rails disposés sous la couverture de l'enceinte, de même structure que les moyens de translation et les rails disposés au niveau du plancher intermédiaire.

Grâce à cette disposition, au moment du chargement, on peut placer un panneau en réserve en première position de chargement, par translation verticale, le charger puis ensuite le déplacer en deuxième position, mettre à sa place un deuxième panneau, le charger et ainsi de suite jusqu'à chargement complet. Au moment du déchargement, les manoeuvres inverses s'effectuent tout aussi rapidement sans faire appel à des travaux de force que les chauffeurs livreurs effectuent sans enthousiasme.

Avantageusement l'élévateur se prolonge vers le bas jusqu'au niveau du plancher de l'enceinte de telle sorte qu'il permet de déplacer par translation verticale le panneau placé en première position entre cette position et une position de chargement.

Cette disposition est particulièrement avantageuse s'agissant de véhicules équipés de hayons qui ne peuvent, dans leur version classique, se déplacer qu'entre le niveau du sol et le niveau du plancher du véhicule. En effet, au lieu de passer directement de la position de réserve à la position intermédiaire ou inversement, un panneau à charger ou à décharger peut être descendu par l'élévateur jusqu'au niveau du plancher du véhicule, donc du hayon, où la manoeuvre est bien plus facile. Ensuite, il est remonté au niveau du plancher intermédiaire ou de la réserve et les manoeuvres s'effectuent comme précédemment.

Selon un mode de réalisation particulièrement efficace de l'invention, l'élévateur est constitué par au moins quatre brins de chaîne entraînés verticalement en synchronisme, chacun équipé de doigts coopérant avec des canaux horizontaux à ouverture évasée placés au voisinage des angles des panneaux, des découpes étant prévues dans les rails pour le passage des galets de roulement.

Ainsi, lorsqu'un panneau arrive au droit de l'élévateur par translation horizontale, soit au niveau de la réserve, soit au niveau intermédiaire, les doigts pénètrent dans les canaux du panneau et assurent la solidarisation du panneau et de l'élévateur. Les mouvements verticaux sont possibles puisque les galets du panneau sont alors en face des découpes prévues dans les rails.

Selon encore un perfectionnement entrant dans le cadre de l'invention, les premiers et les deuxièmes moyens de translation sont à commande unique synchronisée, la commande unique étant avantageusement constituée par deux chaînes sans fin se déplaçant le long des rails, du fond de l'enceinte et des moyens élévateurs, chaque chaîne étant pourvue de doigts coopérant avec des canaux verticaux à ouverture évasée disposés sur les panneaux dans une zone extérieure à l'élévateur, un dispositif d'entraînement assurant l'avance ou le recul des chaînes pas à pas, le pas étant égal à la taille d'un panneau.

Ainsi, une seule commande des chaînes permet d'assurer simultanément et en synchronisme le déplacement des panneaux dans un sens au niveau plancher intermédiaire, et en sens contraire pour ceux qui sont en réserve. Lorsque le panneau placé en première position s'efface, un panneau en réserve vient automatiquement au droit de l'élévateur pour prendre sa place. Inversement, lorsqu'un panneau chargé atteint cette première position, l'élévateur se trouve libéré du panneau précédent qui est mis en réserve.

Il va de soi que selon la nature des charges unitaires à manipuler, la structure des panneaux peut être conçue de diverses façons. S'agissant cependant de conteneurs mobiles, il s'est révélé avantageux de réaliser les panneaux sous forme de simples châssis recevant des rails de guidage coopérant avec les roulettes des conteneurs ou avec tout moyen de translation des charges unitaires.

Un mode de réalisation de l'invention sera maintenant décrit en référence aux dessins annexés dans lesquels:

- la figure 1 est une vue en perspective schématique d'une semi-remorque conforme à l'invention en cours de chargement ou de déchargement;

- la figure 2 est une vue schématique en coupe longitudinale montrant la même semi-remorque en cours de déchargement;

- les figures 3, 4, 5 et 6 sont des vues illustrant quatre phases du déchargement;

- la figure 7 est une coupe supérieure partielle à plus grande échelle représentant l'élévateur et les moyens de translation au niveau des rails de réserve;

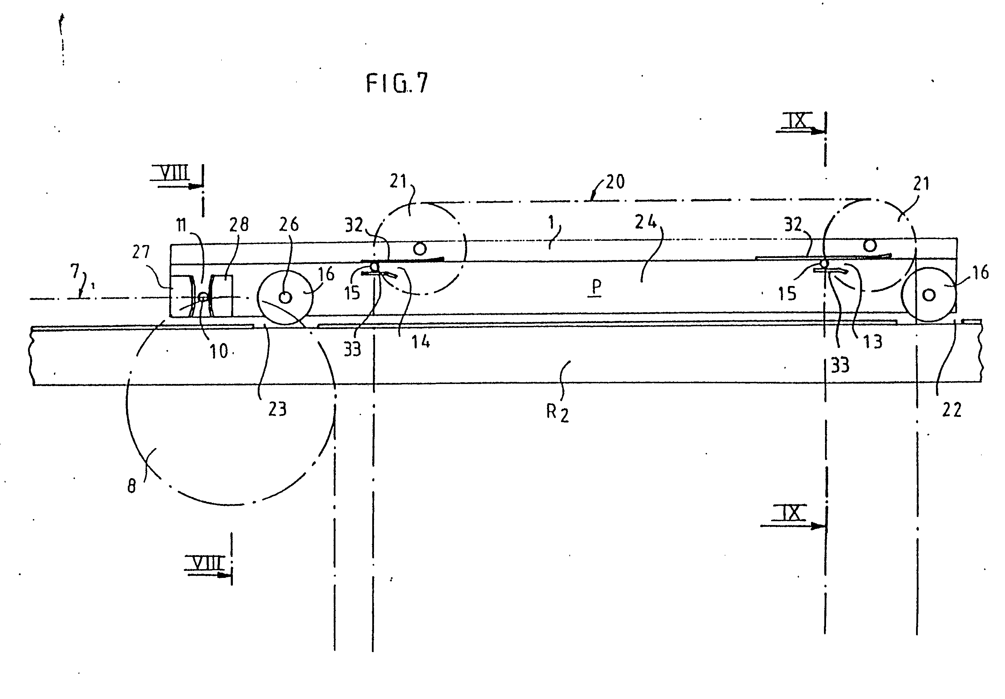

- la figre 8 est une coupe transversale selon la ligne 8-8 de la figure 7; et

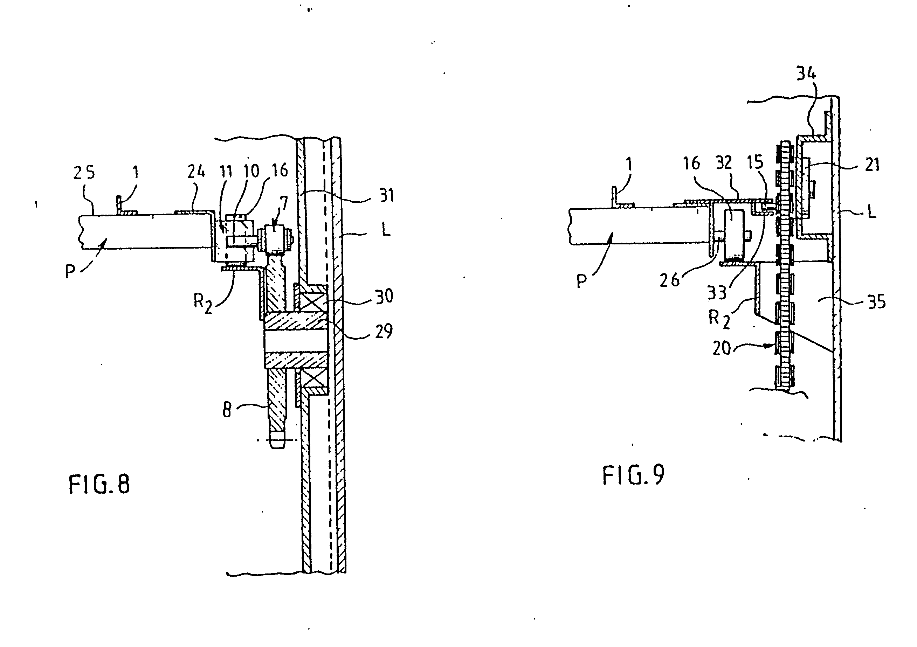

- la figure 9 est une coupe transversale selon la ligne 9-9 de la figure 7.

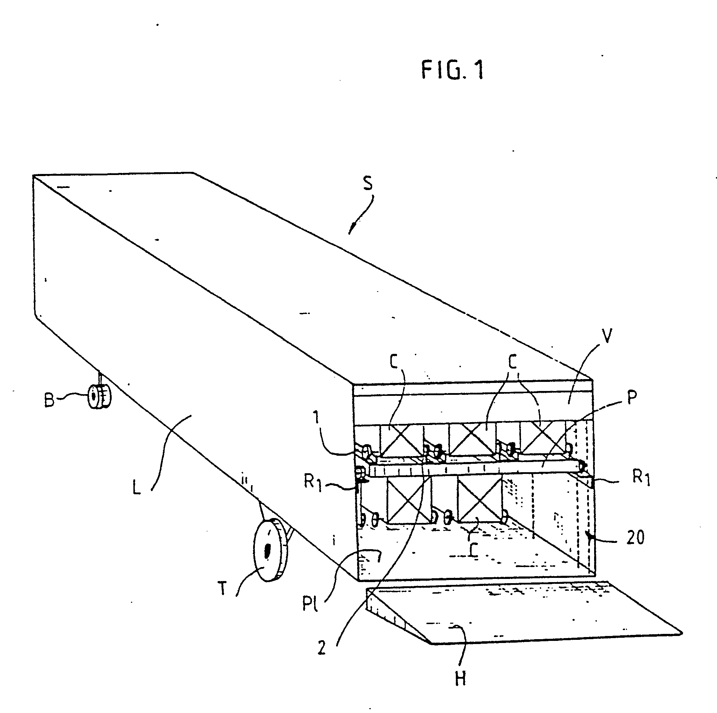

On a représenté en figure 1 une cabine de chargement de semi-remorque S reposant sur son train arrière T et sur ses béquilles dont l'une B est visible. Le volet roulant V assurant la fermeture de la cabine sur l'arrière est très largement ouvert. Le hayon classique H est en position de travail, prêt à être descendu au niveau du sol et remonté au niveau du plancher Pl de la cabine selon les besoins. Le long des parois latérales L courent, à mi-hauteur, deux rails $R_1$ qui supportent sept panneaux identiques au panneau P seul visible.

Ce panneau P constitué d'un simple châssis métallique reçoit à son tour six rails parallèles longitudinaux 1 à 6, pour le guidage des roulettes de conteneurs C.

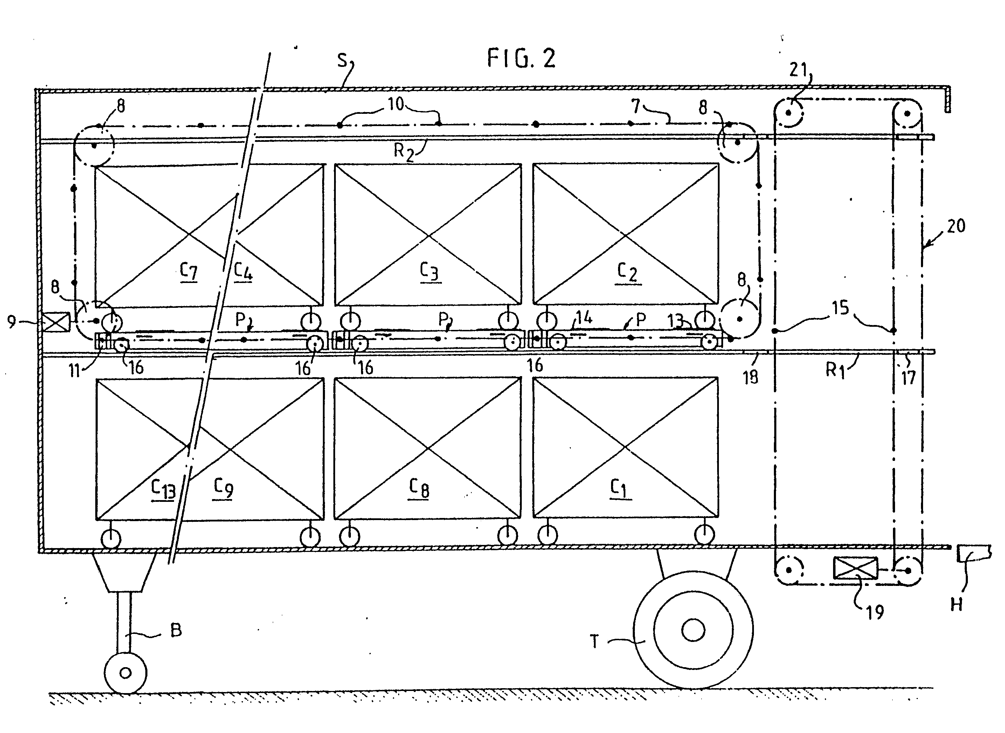

On se reportera maintenant avantageusement à la figure 2 qui montre la même cabine S en coupe transversale schématique au début de son déchargement ou naturellement à la fin de son chargement. La cabine S n'est pas représentée dans toute sa longueur. Dans l'exemple choisi, elle permet de recevoir en longueur sept conteneurs mobiles. La figure 1 a montré qu'en largeur, il y a la place pour trois conteneurs. La contenance théorique de la cabine est donc de quarantedeux conteneurs puisqu'ils sont disposés sur deux rangées.

En réalité, il peut être déconseillé de laisser un panneau unitaire dans ls première position intermédiaire puisque, dans cette position, ce panneau est supporté par l'élévateur, ses galets se trouvant au droit de découpes des rails. Par contre, rien n'interdit de placer trois conteneurs dans la première position au niveau du plancher dite position de chargement. La contenance réelle de la cabine est donc de trente-neuf conteneurs.

La figure 2 montre comment se présente la cabine lorsque l'on a déchargé les trois conteneurs mobiles placés en position de chargement. A partir de cette situation et selon le plan de livraison établi, on peut, soit décharger les conteneurs $C_1$ placés en deuxième position sur le plancher, qui sont accessibles, ou les conteneurs $C_2$ placés en deuxième position intermédiaire. Pour la facilité des explications qui suivent, on supposera que l'on décharge d'abord les conteneurs $C_2$, $C_3$, $C_4$ jusqu'à $C_7$ de la rangée intermédiaire, puis ensuite les conteneurs $C_1$, $C_8$, $C_9$ jusqu'à $C_{13}$ de la rangée inférieure qui sont alors tous accessibles.

Pour procéder au déchargement du conteneur $C_2$, on utilise successivement les moyens de translation puis l'élévateur. Les moyens de translation sont essentiellement constitués de deux chaînes semblables (7) courant en continu, grâce à huit pignons portant tous la référence (8), le long des rails $R_1$ du plancher intermédiaire et le long des rails $R_2$ disposés à peu de distance de la couverture de la cabine, ainsi que le long de la paroi avant de la cabine et le long de l'élévateur. L'entraînement a lieu par un moteur représenté schématiquement en (9), qui est accouplé à l'axe de deux des pignons.

Les chaînes (7) sont équipées d'une série de doigts (10) qui viennent en prise avec des canaux verticaux à ouverture évasée tels que (11), disposés sur les flancs latéraux des panneaux unitaires P. On constate que si l'on met en marche le moteur M de façon que la chaîne (7) tourne dans le sens inverse du sens des aiguilles d'une montre, tous les panneaux P vont se déplacer vers l'arrière, grâce à quoi la conteneurs $C_2$ atteignent la première position intermédiaire au droit de l'élévateur, les conteneurs $C_3$ prenant la place des conteneurs $C_2$ et ainsi de suite, la place des conteneurs $C_7$ devenant vacante.

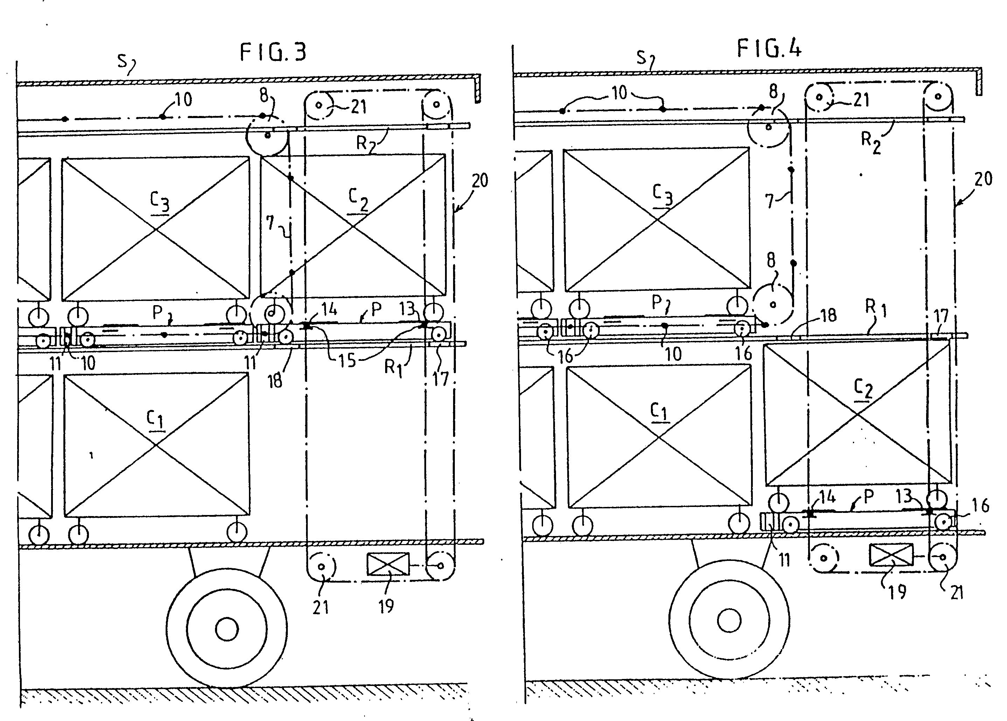

Simultanément, les canaux horizontaux à ouverture évasée situés à l'extrémité arrière des panneaux en 13 ou au voisinage de l'extrémité avant en 14 viennent en prise avec les doigts (15) qui équipent l'élévateur, tandis que les galets (16) de ce même panneau viennent au droit des découpes (17) et (18) prévues dans les rails $R_1$. On se trouve alors dans la position représentée en figure 3.

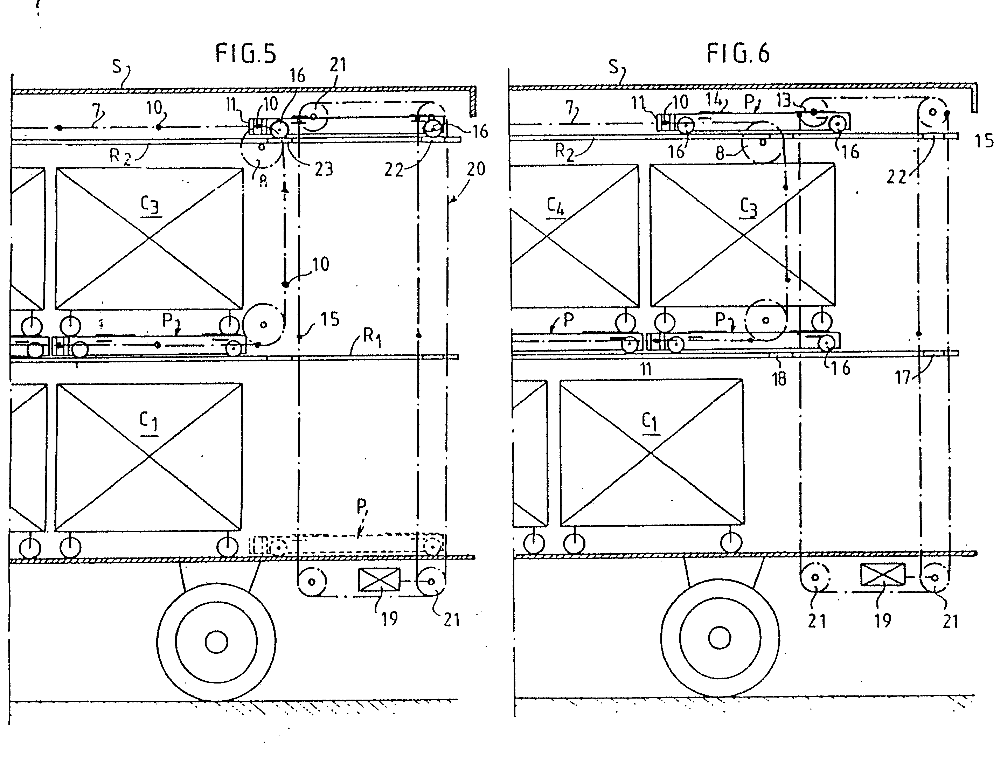

Le chauffeur livreur, après avoir stoppé le moteur (9), peut maintenant mettre en route le moteur (19) disposé sous la cabine, qui commande l'élévateur. Ce dernier est constitué par deux chaînes sans fin (20) supportées par des pignons (21). De façon classique, ces chaînes comportent deux bras parallèles se déplaçant dans le même sens grâce à la présence à l'extrémité arrière d'un double brin se déplaçant en sens contraire. On constate que la mise en route du moteur (19) dans le sens convenable permet de réaliser la descente du panneau unitaire supportant les conteneurs $C_2$ de la position intermédiaire à la position de chargement, les galets (16) traversant les découpes (17) et (18). On se trouve alors dans la position représentée en figure 4 et il est possible de transférer un à un les conteneurs $C_2$ sur le hayon pour les décharger. Le panneau unitaire libéré de ses conteneurs a été représenté en pointillés à la figure 5 et par manoeuvre du moteur (19) en sens inverse, ce panneau peut être transféré en position de réserve, c'est-à-dire dans la position représentée en traits pleins sur cette même figure. Les galets (16) ont traversé successivement les découpes (17) et (18) des rails $R_1$ et les découpes semblables (22) et (23) des rails $R_2$. En fin de course, le canal vertical (11) du panneau est venu en prise avec l'un des doigts (10) de la chaîne de translation (7).

On met alors à nouveau en marche le moteur (9) pour pratiquer la même manoeuvre que précédemment qui est représentée en cours d'exécution en figure 6. Les conteneurs $C_3$ passent en première position, suivis des conteneurs $C_4$ et $C_7$ qui se décalent d'une position. En fin de manoeuvre, le conteneur $C_3$ sera disposé comme le conteneur $C_2$ à la figure 3 et il peut être descendu en position de chargement comme le conteneur $C_2$ à la figure 4.

Mais, simultanément, la chaîne (7) a entraîné le panneau qui était en première position de réserve, c'est-à-dire le panneau qui, à l'origine, portait les conteneurs $C_2$. La figure 6 montre que ce panneau se dégage de l'élévateur et qu'en fin de course il occupera la seconde position de réserve. Enfin, le panneau qui supporte les conteneurs $C_3$, après déchargement, sera à son tour mis en première position de réserve et ainsi de suite.

Ainsi, lorsque les conteneurs $C_7$ auront été déchargés, on trouvera en position de réserve à partir de la première position et en allant vers l'avant de la cabine successivement les panneaux correspondant aux conteneurs $C_7$, $C_6$ etc ... jusqu'à $C_2$ à la suite les uns des autres sur le rail $R_2$. Comme on l'a indiqué plus haut, on peut alors décharger de façon classique les conteneurs $C_1$, $C_8$ à $C_{13}$ qui sont tous accessibles puisqu'il n'y a plus aucun panneau en position intermédiaire.

Les manoeuvres à effectuer durant le chargement découlent à l'évidence de ce qui précède. Pour la commodité, on charge tout d'abord les conteneurs au niveau du plancher de la cabine, sauf à l'extrémité arrière. Ensuite, on place le premier panneau en réserve dans la position de chargement grâce à l'élévateur, ce qui revient à le transférer de la position en traits pleins à la position en pointillés de là figure 5; on le charge et on remonte en position intermédiaire grâce à quoi ses canaux verticaux viennent en prise avec les doigts (10) de la chaîne de translation (7). La manoeuvre de cette chaîne permet de transférer ce panneau nouvellement chargé de la première position à la seconde, tandis que simultanément, le panneau en deuxième position de réserve s'est déplacé jusqu'à la première position de réserve au droit de l'élévateur, prêt à son tour à être chargé.

Les figures 7, 8 et 9 montrent l'agencement constructif des moyens mécaniques utilisés. On voit qu'un panneau est essentiellement constitué de deux cornières latérales (24) reliées par des traverses (25) qui supportent les rails 1 à 6 longitudinaux servant de guidage aux roulettes des conteneurs. Outre les galets (16) montés sur des axes (26), les cornières (24) portent à leur extrémité avant des fers repliés (27), (28) dont les ailes constituent les canaux à ouverture évasée (11) aptes à venir en prise avec les doigts (10) de la chaîne (7) dont l'un des pignons (8) est visible. Les pignons (8) sont montés sur des moyeux (29) coopérant avec des roulements (30). Ces derniers sont à leur tour portés par un caisson (31) renforçant la paroi latérale L de la cabine.

Enfin, les cornières (24) portent chacune deux tôles (32) constituant la face supérieure des canaux à ouverture évasée (13) et (14) complétées par des tôles repliées (33) qui constituent la face inférieure de ces mêmes canaux.

On voit que ces derniers sont en prise avec les doigts (15) de la chaîne (20) dont les pignons (21) sont à leur tour supportés par des caissons (34) solidaires de la paroi L. Enfin, les rails $R_2$, comme d'ailleurs les rails $R_1$ sont supportés de distance en distance par des potences (35) montées sur la paroi.

Il est aisé de constater à la lumière de la description qui précède que les organes mécaniques permettant de réaliser l'invention sont particulièrement simples et donc peu onéreux.

La commande électrique peut être soit manuelle, soit automatique, soit semi-automatique. Elle permet en tous cas de commander à distance les séquences de chargement et de déchargement qui s'effectuent sans perte de temps et sans fatigue. Enfin, les figures et en particulier la figure 2 montrent que le volume utile de la cabine est entièrement utilisé à l'exception peut-être de l'espace arrière du niveau intermédiaire. Enfin, la sécurité est parfaitement assurée étant entendu que, naturellement, il est possible de prévoir des mqyens classiques pour immobiliser les conteneurs pendant les déplacements.

**Revendications**

1. Enceinte pour le stockage et la manutention rapide de charges unitaires, de forme parallélépipédique, et en particulier cabine de chargement (S) de véhicule routier accessible par l'arrière, qui comprend au moins un plancher constitué de panneaux juxtaposés (P) reposant sur une paire de rails ($R_1$), des moyens de mise en réserve (15-20) étant prévus pour effacer le premier panneau ainsi que chaque panneau suivant lorsqu'il occupe la position du premier ainsi que pour effectuer la manoeuvre inverse, tandis que des moyens de translation (7-10) sont prévus pour placer successivement chaque panneau, par translation sur les rails, dans la position du premier, lorsque le précédent a été effacé, ainsi que pour effectuer la manoeuvre inverse, enceinte caractérisée en ce qu'elle est accessible seulement par une de ses faces de plus petite dimension, en ce que le plancher est un plancher intermédiaire entre le plancher de l'enceinte et sa couverture, et en ce que les moyens de mise en réserve sont constitués par un élévateur (20) qui déplace par translation verticale le panneau placé en première position entre cette position et une position de réserve contre la couverture de l'enceinte, élévateur complété par des deuxièmes moyens de translation (7-10) et une deuxième paire de rails ($R_2$) disposés sous la couverture de l'enceinte, de même structure que les moyens de translation (7-10) et les rails ($R_1$) disposés au niveau du plancher intermédiaire.

2. Enceinte selon la revendication 1, caractérisée en ce que les panneaux (P) reposent sur les rails ($R_1$, $R_2$) par l'intermédiaire de galets de roulement (16).

3. Enceinte selon la revendication 1 ou la revendication 2, caractérisée en ce que l'élévateur se prolonge vers le bas jusqu'au niveau du plancher de l'enceinte de telle sorte qu'il permet de déplacer par translation verticale le panneau placé en première position entre cette position et une position de chargement.

4. Enceinte selon la revendication 3, caractérisée en ce que l'élévateur est constitué par au moins quatre brins de chaîne (20) entraînés verticalement en synchronisme, chacun équipé de doigts (15) coopérant avec des canaux horizontaux à ouverture évasée (13-14) placés au voisinage des angles des panneaux, des découpes (17-18-22-23) étant prévues dans les rails pour le passage des galets de roulement.

5. Enceinte selon l'une des revendications 1 à 4, caractérisée en ce que les premiers et les deuxièmes moyens de translation (7-10) sont à commande unique (9) synchronisée.

6. Enceinte selon la revendication 5, caractérisée en ce que la commande unique des deux moyens de translation est constituée par deux chaînes sans fin (7) se déplaçant le long des rails ($R_1$, $R_2$), du fond de l'enceinte et des moyens élévateurs, chaque chaine étant pourvue de doigts (10) coopérant avec des canaux verticaux à ouverture évasée (11) disposés sur les panneaux (P) dans une zone extérieure à l'élévateur, un dispositif d'entraînement (9) assurant l'avance ou le recul des chaînes pas à pas, le pas étant égal à la taille d'un panneau.

7. Enceinte selon l'une des revendications 1 à 6, caractérisée en ce que les panneaux sont des châssis (24-25) recevant des rails (1-6) de guidage coopérant avec les moyens de translation des charges unitaires.

**Patentansprüche**

1. Behälter für die Lagerung und den raschen Transport von quaderförmigen Einheitsladungen und inbesondre von hinten zugänglicher Straßenfahrzeug-Laderaum (S), der mindestens aus einem aus nebeneinander liegenden Platten (P) und auf einem Schienenpaar (R) ruhenden Platten besteht, wobei Mittel zur Reservehaltung (15-20) zwecks Rückstellung der ersten Platte sowie jeder folgenden Platte, wenn sie die Lage der ersten einnimmt, und zur Durchführung des umgekehrten Vorgangs vorgesehen sind, während Verschiebungsmittel (7-10) vorgesehen sind, um nacheinander jede Platte durch Verschieben auf den Schienen in die Lage der ersteren zu bringen, wenn die vorausgehende rückgestellt wurde, sowie um den umgekehrten Vorgang durchzuführen, dadurch gekennzeichnet, daß der Behälter nur über eine seiner Seiten von kleinster Abmessung zugänglich ist, dan der Boden ein Zwischenboden zwischen dem Boden des Behälters und seiner Abdeckung ist, und daß die Mittel zur Reservestellung aus einem Aufzug (20) bestehen, der durch lotrechte Verschiebung die in die erste Stellung zwischen dieser Lage und einer Reservestellung gegen die Abdeckung des Behälters versetzt, wobei der Aufzug durch zweite Verschiebungsmittel (7-10) und ein zweites Schienenpaar (R₂) ergänzt wird, die unter der Abdeckung des Behälters angeordnet sind und denselben Aufbau wie die Verschiebungsmittel (7-10) und die Schienen (R₁) aufweisen, die auf der Höhe des Zwischenbodens angeordnet sind.

2. Behälter nach Anspruch 1, dadurch gekennzeichnet, daß die Platten (P) auf den Schienen (R₁, R₂) über Laufrollen (15) rollen.

3. Behälter nach Anspruch 1 oder Anspruch 2, dadurch gekennzeichnet, daß der Aufzug nach unten bis zur Höhe des Behältersbodens derart verlängert ist, daß er durch lotrechte Verschiebung die in die erste Lage gebrachte Platte zwischen diese Stellung und eine Ladestellung zu versetzen ermöglicht.

4. Behälter nach Anspruch 3, dadurch gekennzeichnet, daß der Aufzug aus mindestens vier Kettentrumms (20) gebildet ist, die im Gleichlauf lotrecht angetrieben werden, und von denen jedes mit Fingern (15) im Zusammenwirken mit horizontalen Rillen mit bauchig ausgebildeter Öffnung (13-14) versehen ist, die in der Mähe der Plattenwinkel angeordnet sind, wobei Ausschnitte (17-18-22-23) in den Schienen für den Durchtritt der Laufrollen vorgesehen sind.

5. Behälter nach einem der Ansprüche 1 bis 4, dadurch gekennzeichnet, dan die ersten und die zweiten Verschiebungsmittel einheitlichen Antrieb aufweisen und synchronisiert sind.

6. Behälter nach Anspruch 5, dadurch gekennzeichnet, daß der einzige Antrieb der beiden Verschiebungsmittel aus zwei endlosen Ketten (7) besteht, die entlang den Schienen (R, R) vom Boden des Behälters und den Aufzugsmitteln her verlaufen, wobei jede Kette mit Fingern (10) versehen ist, die mit lotrechten Rillen mit bauchiger Offnung (11) zusammenwirken, welche auf den Platten (P) in einem aunerhalb des Aufzuges befindlichen Bereich angeordnet sind, während eine Antriebsvorrichtung (9) das Vorrücken oder Zurückfahren der Ketten Schritt für Schritt bewerkstelligt, wobei der Schritt gleich dem Schnitt einer Platte ist.

7. Behälter nach einem der Ansprüche 1 bis 6, dadurch gekennzeichnet, daß die Platten Laufgestelle (24-25) zur Aufnahme der Führungsschienen (1-6) sind, welche mit den Mitteln zur Verlagerung der Einheitsladungen zusammenwirken.

## Claims

1. Enclosure for the storage and rapid handling of unit loads, having a parallelepiped shape, and more especially a loading cabin (S) of a road vehicle which is accessible from the rear, which comprises at least one floor composed of adjacent panels (P) resting on a pair of rails (R1), means for keeping a reserve (15-20) being provided in order to remove the first panel and also each succeeding panel when it occupies the position of the first and also to carry out the reverse movement, whilst a conveyor chain (7-10) is provided in order to place each panel in succession by a translating movement on the rails in the position of the first one, when the preceding one has been removed, and also to carry out the reverse movement, the enclosure being characterised in that it is accessible only through one of its faces of smaller dimension, that the floor is an intermediate floor between the floor of the enclosure and its cover, and that the means of keeping in reserve comprises a lift (20) which moves by a vertical translating movement the panel which is placed in the first position between this position and a reserve position against the cover of the enclosure, the lift being completed by second translating means (7-10) and a second pair of rails (R2) arranged below the cover of the enclosure, having the same structure as the translating means (7-10) and the rails (RI) arranged on level with the intermediate floor.

2. Enclosure as claimed in Claim 1, characterised in that the panels (P) rest on the rails (R1 and R2) by means of rollers (16).

3. Enclosure as claimed in Claim 1 or Claim 2 characterised in that the lift extends downwards to the level of the floor of the enclosure in such a way that it is possible to move by vertical translation the panel placed in the first position between this position and a loading position.

4. Enclosure as claimed in Claim 3, characterised in that the lift is composed of at least four chain stands (20) moved vertically in synchronism, each one being equipped with fingers (15) which cooperate with horizontal channels having a bell-mouthed opening (13-14) placed in the vicinity of the angles of the panels, notches (17-18-22-23) being provided in the rails for the rollers to pass through.

5. Enclosure as claimed in one of the Claims 1 to 4, characterised in that the first and the second translating means (7-10) have a single synchronized drive (9).

6. Enclosure as claimed in Claim 5, characterised in that the single drive of the two translating means is composed of two endless chains (7) moving along rails (R1 and R2) from the bottom of the enclosure and lifting means, each chain being provided with fingers (10) which cooperate with vertical channels having a bell-mouthed opening (11) which are arranged on panels (P) in a zone outside the lift, a driving device (9) producing the forward or backward movement of the chains step by step, the step being equal to the size of one panel.

7. Enclosure as claimed in one of the Claims 1 to 6, characterised in that the panels are chassis (24-25) accepting guide rails (1-6) which cooperate with the unit load translating means.

FIG. 1

FIG. 2

FIG.4

FIG.3

FIG.5

FIG.6

0 099 280

FIG.7

FIG.8

FIG.9

0 099 280